# EUROPÄISCHE PATENTANMELDUNG

(11) **EP 1 302 294 A2**
(43) Veröffentlichungstag der Anmeldung: **16.04.2003**
(21) Anmeldenummer: 02020264.4
(22) Anmeldetag: 11.09.2002
(51) Int. Cl.: B29C 44/34, B60N 2/58, B62D 25/24

(54) **PUR-Schaumabdichtung**

(30) Priorität: 15.10.2001 DE 10150791
(71) Anmelder: Johnson Controls GmbH, 51399 Burscheid (DE)
(72) Erfinder: Wellen, Heinz-Dieter, 47805 Krefeld (DE); Brücker, Hubert, 40699 Erkrath (DE)
(74) Vertreter: Kutzenberger, Helga, Dr.

(57) **Zusammenfassung**

Die Erfindung betrifft ein Verfahren zur Herstellung von Zusammenbauteilen aus einzelnen Bauteilen vor einem Hinterschäumen der Zusammenbauteile, wobei mindestens zwei Bauteile (1, 2) bereichsweise überlappend übereinander angeordnet und im Überlappungsbereich (4) miteinander verbunden werden. Dabei wird ein zwischen den zu verbindenden Bauteilen (1, 2) im Überlappungsbereich (4) vorhandener Spalt (6) gasdurchlässig, aber schaumdicht verschlossen.

Ferner betrifft die Erfindung auch ein entsprechendes Zusammenbauteil, bestehend aus mindestens zwei sich überlappenden Bauteilen (1, 2), die in ihrem Überlappungsbereich verbunden sind. Die Bauteile (1, 2) sind in einem Spalt (6) in ihrem Überlappungsbereich (4) durch einen gasdurchlässigen und für ein Schäumungsmaterial zum Hinterschäumen des Zusammenbauteils undurchlässigen Materialzuschnitt (8) abgedichtet.

## Beschreibung

Die vorliegende Erfindung betrifft ein Verfahren zur Herstellung von Zusammenbauteilen aus einzelnen Bauteilen vor einem Hinterschäumen der Zusammenbauteile, wobei mindestens zwei Bauteile bereichsweise überlappend übereinander angeordnet und im Überlappungsbereich miteinander verbunden werden.

Zusammenbauteile, die mit einem PUR-Schaum versehen werden, sind hinlänglich bekannt. Der PUR-Schaumdurchtritt an den einzelnen Komponenten wird durch vollflächige Verklebung oder Verschweißung vermieden.

Bei der Verschweißung der Komponenten können sich Schwierigkeiten ergeben, da sich nicht alle Materialien miteinander verschweißen lassen. Ebenso lassen sich einige Kunststoffe erst nach einer Oberflächenbehandlung miteinander verkleben. Der Einsatz von Klebstoffen verursacht hohe Emmissionen und stellt einen hohen Verfahrensaufwand dar.

Der vorliegenden Erfindung liegt die Aufgabe zugrunde, ein Verfahren zur Herstellung von Zusammenbauteilen zu entwickeln, bei dem auch unterschiedliche Materialien miteinander verbunden werden können und das Zusammenbauteil dennoch schaumdicht ist.

Erfindungsgemäß wird dies dadurch erreicht, daß ein zwischen den zu verbindenden Bauteilen im Überlappungsbereich vorhandener Spalt gasdurchlässig, aber schaumdicht verschlossen ist.

Der Vorteil der vorliegenden Erfindung besteht darin, daß ein kostengünstiges Verfahren zur Herstellung von Zusammenbauteilen geschaffen wird, das geringere Kosten und einen geringeren Verfahrensaufwand als das Kleben verursacht. Außerdem ist eine Entgasung über den gasdurchlässigen Materialzuschnitt möglich.

Weitere vorteilhafte Merkmale und Vorteile der Erfindung sind in der nachfolgenden Beschreibung und in den Unteransprüchen enthalten.

Anhand eines bevorzugten, in den beiliegenden Zeichnungen dargestellten Ausführungsbeispiels wird die Erfindung näher erläutert. Dabei zeigen:

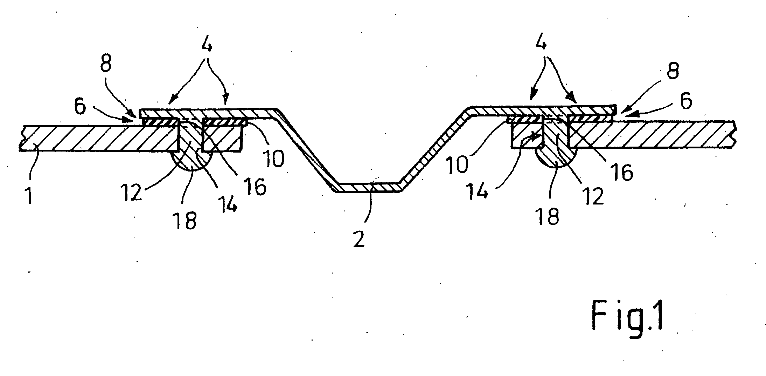

- Fig. 1: einen Schnitt durch ein in dem erfindungsgemäßen Verfahren hergestelltes Zusammenbauteil,
- Fig. 2: eine Perspektivansicht, die schaumseitig vor der Nietung dargestellt ist, auf ein in dem erfindungsgemäßen Verfahren hergestelltes Zusammenbauteil, insbesondere eine Seitenverkleidung,
- Fig. 3: eine rückseitig dargestelllte Perspektivansicht, die auf ein in dem erfindungsgemäßen Verfahren hergestelltes Zusammenbauteil, insbesondere eine Seitenverkleidung.

Wie aus den Figuren ersichtlich, werden ein erstes Bauteil 1 und ein zweites Bauteil 2 bereichsweise überlappend übereinander angeordnet. Im Überlappungsbereich 4 werden die beiden Bauteile 1, 2 miteinander verbunden, wobei ein zwischen den Bauteilen 1, 2 vorhandener Spalt 6 gasdurchlässig, aber schaumdicht verschlossen wird. Vor dem Verbinden der Bauteile 1, 2 wird auf eines der Bauteile 1, 2 im Überlappungsbereich 4 ein gasdurchlässiger Materialzuschnitt 8 fixiert, des den Spalt 6 verschließt. Insbesondere wird als Materialzuschnitt 8 ein Dichtvlieslage 10 verwendet. Die Dichtvlieslage besteht vorzugsweise aus einem Vlies aus Zellwolle und/oder Polyester. Die beiden Bauteile 1, 2 werden durch mechanische, partielle Verbindungen, insbesondere durch Nietdome 12, kraft- und formschlüssig miteinander verbunden. Diese Nietdome 12 sind an dem Bauteil 2 einstückig ausgebildet und verlaufen durch angepaßte Durchbrüche 14 des Bauteils 1, sowie entsprechende Löcher 16 der Dichtvlieslage 8. Die Verbindung erfolgt durch Nietung, wobei durch ein thermisches Verfahren aus den freien Enden des, aus einem thermoplastischen Kunststoff bestehenden Nietdomen 12 Nietköpfe 18 ausgebildet werden. Vorzugsweise wird die Nietverbindung mit Ultraschall hergestellt. Das Verfahren ist bekannt und wird hier nicht näher erläutert.

Zur Herstellung des Bauteils 1 werden insbesondere Naturfasermatten mit einem Harz getränkt und in dem vorgewärmten Werkzeug verpreßt. Hierbei findet eine Vernetzungsreaktion statt, bei der sich das flüssige Harz verfestigt, so daß nachfolgend das vorgeformte Bauteil 1 in das Abkühlwerkzeug eingelegt werden kann. Vor dem Plazieren des vorgeformten Bauteils 1 wird das Abkühlwerkzeug mit der Dichtvlieslage 10 bestückt. Das Einlegen der Dichtvlieslage 10 kann manuell oder automatisiert erfolgen. Vorteilhafterweise sind im Abkühlwerkzeug Dome ausgebildet, die in die Durchbrüche 14 des Bauteils 1 und in die Löcher 16 der Dichtvlieslage 10 eingreifen, so daß die Dichtvlieslage 10 lagepositioniert auf dem Bauteil 1 angeordnet wird. Vorzugsweise ist die Dichtvlieslage 10 mit einem temperaturaktivierendem Klebersystem ausgerüstet, so daß eine ausreichende Haftung der Dichtvlieslage 10 auf dem Bauteil 1 gewährleistet wird. Nach dem Schließen des Abkühlwerkzeuges wird das Bauteil 1 auf Entformungstemperatur abgekühlt und entformt. Nachfolgend wird das Bauteil 1 in einem Stanzwerkzeug auf Kontur geschnitten. Vorzugsweise findet die Abkühlung und der Konturschnitt des Bauteils 1 in einem Verfahrensschritt statt.

Alternativ zu einer Bestückung des Abkühlwerkzeuges mit der Dichtvlieslage 10 ist es auch möglich, das Bauteil 2 mit der Dichtvlieslage 10 zu versehen.

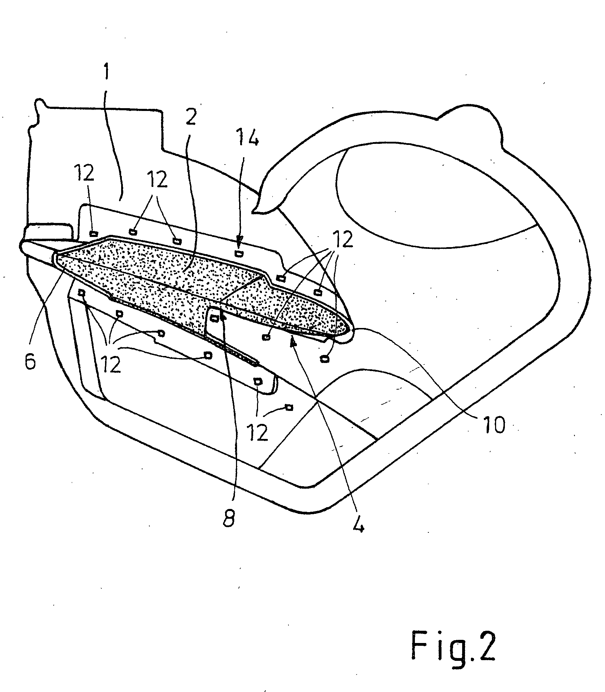

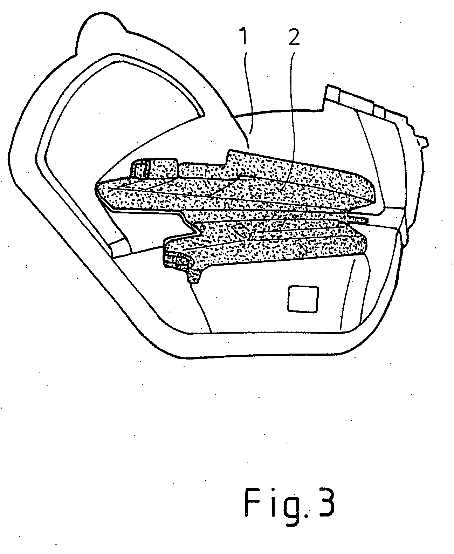

Wie in den Figuren 2 und 3 zu sehen, ist das in dem erfindungsgemäßen Verfahren herzustellende Zusammenbauteil eine Seitenverkleidung. Diese Seitenverkleidung besteht aus einem Trägerteil als Grundkörper und einer Armauflage als Einsatzteil. Das Trägerteil entspricht dem Bauteil 1, während das Einsatzteil dem Bauteil 2 entspricht. Die beiden Bauteile sind in deren Spalt 6 im Überlappungsbereich durch den gasdurchlässigen und für ein Schäumungsmaterial zum Hinterschäumen des Zusammenbauteils undurchlässigen Materialzuschnitts 8 abgedichtet. Der Materialzuschnitt 8 wird durch eine Dichtvlieslage 10 gebildet. Die Dichtvlieslage 10 besteht vorzugsweise aus einem Vlies aus Zellwolle und/oder Polyester. Die Bauteile 1, 2 sind durch Nietverbindungen form- und kraftschlüssig partiell miteinander verbunden. Die Nietverbindung ist durch Ultraschall hergestellt, wobei aus freien Enden, der aus einem thermoplastischen Kunststoff bestehenden Nietdome 12, die durch Durchbrüche 14 des Bauteils 1 und durch Löcher 16 der Dichtvlieslage 10 verlaufen, Nietköpfe 18 ausgebildet sind.

Das fertige Zusammenbauteil wird mit einen PUR-Schaum hinterschäumt. Der Schaumstoff dient zur Isolierung und zur Erniedrigung des Geräuschpegels im Fahrgast-Innenraum. Die bei dem Aufschäumprozeß auftretenden Gase können durch die Dichtvlieslage 10 entweichen, aber die Dichtvlieslage 10 ist dennoch schaumdicht, so daß ein PUR-Schaumdurchtritt vermieden wird.

Die Erfindung ist nicht auf das dargestellte und beschriebene Beispiel beschränkt, sondern umfaßt auch alle im Sinne der Erfindung gleichwirkenden Ausführungen.

Ferner ist die Erfindung bislang noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein.

Dies bedeutet, daß grundsätzlich jedes Einzelmerkmal von Anspruch 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Verfahren zur Herstellung von Zusammenbauteilen aus einzelnen Bauteilen vor einem Hinterschäumen der Zusammenbauteile, wobei mindestens zwei Bauteile (1,2) bereichsweise überlappend übereinander angeordnet und im Überlappungsbereich (4) miteinander verbunden werden,
**dadurch gekennzeichnet, daß** ein zwischen den zu verbindenden Bauteilen (1, 2) im Überlappungsbereich (4) vorhandener Spalt (6) gasdurchlässsig, aber schaumdicht verschlossen wird.

2. Verfahren nach Anspruch 1,
**dadurch gekennzeichnet, daß** zum Verschließen des Spaltes (6) ein Materialzuschnitt (8) vor dem Verbinden der Bauteile (1, 2) auf eines der Bauteile (1, 2) im Überlappungsbereich (4) fixiert wird.

3. Verfahren nach Anspruch 2,
**dadurch gekennzeichnet, daß** als Materialzuschnitt (8) eine Dichtvlieslage (10) verwendet wird.

4. Verfahren nach einem der Ansprüche 1-3,
**dadurch gekennzeichnet, daß** die beiden Bauteile (1, 2) kraft- und formschlüssig miteinander partiell verbunden werden.

5. Verfahren nach Anspruch 4,
**dadurch gekennzeichnet, daß** die Verbindung durch Nietung erfolgt.

6. Verfahren nach Anspruch 5,
**dadurch gekennzeichnet, daß** die Nietung durch Ultraschall erfolgt, wobei aus einem thermoplastischen Kunststoff bestehende Nietdome (12) verwendet werden, an deren freien Enden Nietköpfe (18) ausgebildet werden.

7. Verfahren nach einem der Ansprüche 1 bis 6,
**dadurch gekennzeichnet, daß** Naturfasermatten mit einem Harz getränkt und in einem vorgewärmten Formwerkzeug zur Verformung verpreßt werden, nachfolgend das vorgeformte Bauteil (1) in ein Abkühlwerkzeug eingelegt und auf Entformungstemperatur abgekühlt wird.

8. Verfahren nach Anspruch 7,
**dadurch gekennzeichnet, daß** in dem Abkühlwerkzeug vor dem Einlegen des vorgeformten Bauteils (1) mit der Dichtvlieslage (10) positionsgerecht fixiert wird.

9. Verfahren nach Anspruch 8,
**dadurch gekennzeichnet, daß** im Abkühlwerkzeug ausgebildete Dome zur Lagepositionierung der Dichtvlieslage (10) verwendet werden.

10. Verfahren nach einem der Ansprüche 7 bis 9,
**dadurch gekennzeichnet, daß** die Dichtvlieslage (10) mit einem temperaturaktivierendem Klebersystem ausgerüstet ist.

11. Verfahren nach einem der Ansprüche 1 bis 10,
**dadurch gekennzeichnet, daß** das Bauteil (1) in einem Stanzwerkzeug auf Kontur geschnitten wird.

12. Verfahren nach einem der Ansprüche 1 bis 11,
**dadurch gekennzeichnet, daß** die Abkühlung und der Konturschnitt des Bauteils (1) in einem Verfahrensschritt stattfindet.

13. Zusammenbauteil bestehend aus mindestens zwei sich überlappenden Bauteilen (1, 2), die in ihrem Überlappungsbereich verbunden sind, insbesondere nach einem Verfahren gemäß den Ansprüchen 1-12,
**dadurch gekennzeichnet, daß** die Bauteile (1, 2) in einem Spalt (6) in ihrem Überlappungsbereich (4) durch einen gasdurchlässigen und für ein Schäumungsmaterial zum Hinterschäumen des Zusammenbauteils undurchlässigen Materialzuschnitt (8) abgedichtet sind.

14. Zusammenbauteil nach Anspruch 13,
**dadurch gekennzeichnet, daß** der Materialschnitt (8) durch eine Dichtvlieslage (10) gebildet ist.

15. Zusammenbauteil nach einem der Ansprüche 13 oder 14,
**dadurch gekennzeichnet, daß** die Bauteile (1, 2) durch Nietung kraft- und formschlüssig partiell miteinander verbunden sind.

16. Zusammenbauteil nach einem der Ansprüche 13 bis 15,
**dadurch gekennzeichnet, daß** die Nietverbindung durch Ultraschall hergestellt ist, wobei aus freien Enden, der aus einem thermoplastischen Kunststoff bestehenden Nietdome (12), die durch Durchbrüche (14) des Bauteils (1) und durch Löcher (16) der Dichtvlieslage (10) verlaufen, Nietköpfe (18) ausgebildet sind.

17. Zusammenbauteil nach einem der Ansprüche 13 bis 16,
**dadurch gekennzeichnet, daß** die Nietdome (12) einstückig an dem Bauteil (2) ausgebildet sind.
